## Europäisches Patentamt
## European Patent Office
## Office européen des brevets

(11) Veröffentlichungsnummer : **0 308 780 B1**

(12) # EUROPÄISCHE PATENTSCHRIFT

(45) Veröffentlichungstag der Patentschrift :
**03.04.91 Patentblatt 91/14**

(51) Int. Cl.⁵ : **C03B 19/06**

(21) Anmeldenummer : **88114924.9**

(22) Anmeldetag : **13.09.88**

(54) **Verfahren zur Herstellung von offenporigen Sinterkörpern.**

(30) Priorität : **19.09.87 DE 3731649**

(43) Veröffentlichungstag der Anmeldung :
**29.03.89 Patentblatt 89/13**

(45) Bekanntmachung des Hinweises auf die
Patenterteilung :
**03.04.91 Patentblatt 91/14**

(84) Benannte Vertragsstaaten :
**DE ES FR GB IT NL SE**

(56) Entgegenhaltungen :
**EP-A- 0 117 484**
**DE-A- 2 926 331**
**DE-A- 3 103 751**
**DE-A- 3 637 690**
**DE-C- 3 305 854**

(73) Patentinhaber : **Schott Glaswerke**
**Hattenbergstrasse 10**
**W-6500 Mainz (DE)**
**DE ES FR GB IT NL SE**
Patentinhaber : **Carl-Zeiss-Stiftung trading as**
**SCHOTT GLASWERKE**
**Hattenbergstrasse 10**
**W-6500 Mainz 1 (DE)**
**GB**

(72) Erfinder : **Siebers, Friedrich**
**Emmerich-Josef-Strasse 3**
**W-6500 Mainz 1 (DE)**
Erfinder : **Kiefer, Werner**
**Jupiterweg 19**
**W-6500 Mainz (DE)**
Erfinder : **Sura, Maria**
**Hermannstrasse 3**
**W-6507 Ingelheim (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

## Beschreibung

Die Erfindung betrifft ein Verfahren zur Herstellung von zumindest überwiegend aus Glaskeramik bestehenden, offenporigen Sinterkörpern mit großem offenen Porenvolumen und definierten Porendurchmessern, erhältlich durch Sintern eines Gemisches aus sinterfähigem Pulver und anorganischem löslichem Salz definierter Körnung, dessen Schmelzpunkt über der Sintertemperatur des sinterfähigen Pulvers liegt, wobei das Gemisch aus sinterfähigem Pulver und anorganischem Salz zur Bildung eines Formkörpers einem Formgebungsprozeß unterworfen wird und der Formkörper in einem Sinterprozeß versintert wird und das im Sinterkörper enthaltene lösliche Salz nach dessen Abkühlen herausgelöst wird.

Ein bekanntes Verfahren zur Herstellung offenporiger Sinterkörper aus Glas besteht darin, daß gemahlenes Glas bestimmter Korngröße in einer Form auf eine Temperatur erhitzt wird, die in der Nähe der Erweichungstemperatur des Glases liegt. Die Glaskörner erweichen und versintern dadurch an den Berührungsflächen. Der Nachteil dieses Verfahrens besteht darin, daß sich offene Porenvolumina von über 40% bei ausreichender Festigkeit nicht erreichen lassen.

Ein analoges Verfahren zur Herstellung von offenporigen Sinterkörpern aus Keramik besteht darin, daß gemahlene Keramikpulver bestimmter Korngrößen miteinander versintert werden. Auch beim Sintern keramischer Pulver ist das offene Porenvolumen auf maximal etwa 40%, bei ausreichender Festigkeit, begrenzt.

Poröse Glaskeramiken lassen sich auch durch selektives Auslaugen von Kristallphasen erreichen (Deutsche Offenlegungsschrift DE-A-2359735), jedoch können auch hier mit vertretbaren Kosten keine hohen, offenen Porenvolumina erzielt werden.

Für die Herstellung von offenporigen Sinterkörpern aus Glas, Glaskeramik oder Keramik sind eine Reihe von Verfahren bekannt, die davon ausgehen, daß dem sinterfähigen Pulver organische Substanzen zugemischt werden.

Während des Aufheizprozesses werden die organischen Substanzen ausgebrannt und es entstehen dadurch Hohlräume. Der Sinterprozeß muß so geführt werden, daß die Verbindungen dieser Hohlräume und damit die Offenporigkeit erhalten bleiben (Deutsches Patent DE-C-3103751, Deutsche Offenlegungsschrift DE-A-3207623, Japanische Offenlegungsschrift JP-A1-61158-84). Wird bei diesem Verfahren von einem Glaspulver ausgegangen, besteht die Gefahr, daß die Verbindungen der Hohlräume unter Bildung geschlossener Poren zusammensintern. Die Versinterung des glasigen Materials muß daher bei relativ niedrigen Temperaturen erfolgen, so daß die erreichbare, mechanische Festigkeit begrenzt ist. Ein weiterer Nachteil dieses Verfahrens besteht darin, daß die Durchströmbarkeit der offenporigen Sinterglaskörper durch die engen Verbindungen zwischen den Hohlräumen herabgesetzt wird.

Es sind Verfahren zur Herstellung offenporiger Sinterkörper mit definierten Porendurchmessern bekannt, bei denen lösliche, anorganische Salze als Porenbildner eingesetzt werden. Die anorganischen Salze werden nach dem Versintern aus dem Mischkörper herausgelöst, wodurch das offene Porenvolumen entsteht und die Porendurchmesser eine definierte Größe besitzen.

Die Deutsche Patentschrift DE-C-3305854 beschreibt ein Verfahren zur Herstellung offenporiger Sinterglaskörper, bei dem ein Glaspulver mit einer löslichen Substanz versintert wird. Da das Sintergerüst aus Glas besteht, sind die Materialeigenschaften des Sinterkörpers auf solche Eigenschaften begrenzt, die mit dem glasigen Material erreichbar sind (z.B. Temperaturbelastbarkeit, thermische Ausdehnung, chemische Beständigkeit). So wird im allgemeinen als obere Grenze der Temperaturbelastbarkeit eines Glases dessen Transformationstemperatur $T_g$ angegeben. Ein gezielter Ionenaustausch zwischen Glaspulver und anorganischem Salz während des Sinterns hat nur geringen Einfluß auf die Materialeigenschaften des glasigen Körpers, da sich vorwiegend gleichartige Ionen austauschen. Die Materialeigenschaften des offenporigen Sinterglaskörpers sind daher durch gezielten Ionenaustausch nur in engen Grenzen zu variieren.

Die Europäische Patentschrift EP-B1-0117484 beschreibt ein Verfahren zur Herstellung von porösen Sinterkörpern mit großem, offenen Porenvolumen und definierten Porendurchmessern. Bei diesem Verfahren wird von einem feingemahlenen Glas- und/oder kristallisiertem Glaskeramik-Pulver ausgegangen, das mit einem leicht löslichen, anorganischen Salz gemischt wird. Der Oberbegriff des Anspruchs 1 ist aus dieser Druckschrift bekannt.

Das anorganische Salz dient als Porenbildner und wird nach dem Versintern herausgewaschen. Bei der Verwendung eines bereits kristallisierten Glaskeramikpulvers ist von Nachteil, daß dieses Pulver die Sinterfähigkeit des glasigen Zustandes eingebüßt hat. Es lassen sich daher nur durch Zusatzmaßnahmen ausreichende mechanische Festigkeiten erzielen. Eine Möglichkeit besteht im Zusatz eines Glaspulvers, das für die Verbindungsfestigkeit sorgt. Durch diese Methode verschlechtern sich eine Reihe von Materialeigenschaften, da die Eigenschaften der vorliegenden Glasphase die Eigenschaften des Verbundes begrenzen. Eine Versinterung ohne Glaszusatz läßt sich auch erzielen, wenn das kristalline Glaskeramikpulver durch Ionenaustausch mit den Kationen des anorganischen Salzes angelöst wird. Dieser Effekt läßt sich jedoch nur bei wenigen Zusammensetzungen von Glaskeramikpulver und anorganischem Pulver ausnützen.

Die US-A-2209163 beschreibt ein Verfahren zur Herstellung von hochporösen und schallschluckenden Sinterkörpern aus Keramik. Da die Sintertemperaturen der eingesetzten keramischen Pulver über dem Schmelzpunkt der wasserlöslichen porenbildenden Materialien liegen, muß ein zusätzliches Binde- oder Flußmittel für die Versinterung bei niedrigen Temperaturen zugemischt werden. Durch den Zusatz von Binde- oder Flußmitteln werden die Materialeigenschaften der Keramik begrenzt.

Aufgabe der Erfindung ist ein Verfahren zur Herstellung von zumindest überwiegend aus Glaskeramik bestehenden, offenporigen Sinterkörpern, deren Materialeigenschaften über die Steuerung des glaskeramischen Gefüges in weiten Grenzen eingestellt werden können.

Diese Aufgabe wird mit einem Verfahren gemäß Anspruch 1 gelöst.

Das Verfahren gestattet es, die von den beim Kristallisieren entstehenden Kristallphasen abhängigen Materialeigenschaften des offenporigen Sinterkörpers über Ionenaustausch während des Sinterprozesses zu stauern und in weiten Grenzen zu variieren. Der Ionenaustausch zwischen sinterfähigem Pulver und anorganischem Salz ist abhängig von der Führung des Sinterprozesses, sowie von den Zusammensetzungen des sinterfähigen Pulvers und des anorganischen Salzes.

Das erfindungsgemäße Verfahren beruht darauf, daß das sinterfähige Pulver als Hauptbestandteil ein feingemahlenes, kristallisierbares Glaspulver enthält. Beim Versintern des Gemisches aus sinterfähigem Pulver und anorganischem Salz wird die gegenüber kristallinen Keramiken höhere Sinterfähigkeit des glasigen Zustandes ausgenutzt. Auf diesem Wege lassen sich Sinterkörper mit guter mechanischer Festigkeit bei niedrigen Sintertemperaturen herstellen, welche unter den Schmelz- und Zersetzungstemperaturen der zugemischten, anorganischen Salze liegen. Die Überführung in den gewünschten glaskeramischen Zustand erfolgt durch Kristallisation nach dem Versintern.

Beim Versintern keramischer Pulver mit zugemischten, löslichen Salzen als Porenbildner ist es dagegen erforderlich, Binde- oder Flußmittel dem Ausgangsgemisch zuzusetzen, um die Sintertemperatur weit genug zu erniedrigen.

Die Überführung des offenporigen Sinterkörpers in das erfindungsgemäße glaskeramische Gefüge vollzieht sich durch Oberflächenkristallisation, ausgehend von den ehemaligen Oberflächen des kristallisierbaren Glaspulvers. Versinterung und Oberflächenkristallisation sind als Konkurrenzprozesse aufzufassen, die für ein jedes vorliegende Gemisch aus sinterfähigem Pulver und anorganischem Salz gegeneinander zu optimieren sind. Bei vorzeitig einsetzender Oberflächenkristallisation wird die weitere Versinterung zu einem Körper mit ausreichender mechanischer Festigkeit unterbunden. Die von den Pulveroberflächen ausgehende Kristallisation läßt eine kristalline Oberflächenschicht entstehen, die das für die Versinterung notwendige viskose Fließen an den Berührungsstellen der kristallisierbaren Glaspulver verhindert.

Anderseits darf die Befähigung des kristallisierbaren Glaspulvers zur Oberflächenkristallisation nicht so weit unterbunden werden, daß die Kristallisation und Überführung in den gewünschten glaskeramischen Gefügezustand unmöglich wird. In vielen Fällen sind die Eigenschaftsvorteile, die ein glaskeramischer Werkstoff gegenüber einem glasigen Werkstoff besitzt, an einen hohen Kristallphasengehalt gebunden. Bei einer zu weit gehenden Versinterung besteht die Gefahr, daß die ehemaligen Oberflächen der kristallisierbaren Glaspulver verschwinden und nicht mehr in ausreichender Zahl als auslösende Keime für die Oberflächenkristallisation zur Verfügung stehen.

Der geschilderte Zielkonflikt zwischen ausreichender Versinterung und Oberflächenkristallisation erfordert Methoden, die es gestatten, die beiden Vorgänge möglichst getrennt voneinander zu beeinflussen. Nach Bereitstellung dieser Methoden wird es möglich, die erfindungsgemäße Aufgabe für eine Vielzahl unterschiedlicher Zusammensetzungen von sinterfähigem Pulver und anorganischem Salz zu lösen. Über die Steuerung des glaskeramischen Gefüges lassen sich damit die resultierenden Materialeigenschaften des offenporigen Sinterkörpers über einen großen Variationsbereich hinweg gezielt einstellen.

Bei der ersten Methode zur Optimierung der Versinterung unter nachfolgender Oberflächenkristallisation dienen die zugemischten festen, anorganischen Salze als Platzhalter für das beim späteren Herauslösen entstehende offene Porenvolumen. Dadurch kann das sinterfähige Pulver nicht zu einem undurchlässigen Körper zusammensintern.

Das erfindungsgemäße Verfahren gewährt damit einen großen Spielraum bei der Wahl von Aufheizgeschwindigkeit, Sintertemperatur und Sinterzeit. Ist zum Beispiel für die Optimierung von Versinterung und Oberflächenkristallisation eine niedrige Sintertemperatur erforderlich, so läßt sich diese durch eine längere Sinterzeit kompensieren, ohne daß die mechanische Festigkeit bei der Versinterung leidet.

Ein weiterer Vorteil des erfindungsgemäßen Verfahrens besteht darin, daß nach dem Sintern und Herauslösen des Salzes eine zweite Temperaturbehandlung durchgeführt werden kann. Bei dieser zweiten Temperaturbehandlung vollzieht sich die Kristallisation in den gewünschten glaskeramischen Gefügezustand. Diese zweite Temperaturbehandlung wird daher in der Regel bei einer höheren Temperatur als der Sinterprozeß erfol-

3

gen. Die nach dem Herauslösen des Salzes vorliegende, offenporige Struktur des Sinterkörpers muß bei dieser zweiten Temperaturbehandlung erhalten bleiben.

Die Korngröße des kristallisierbaren Glaspulvers spielt eine große Rolle für die Versinterung und die nachfolgende Oberflächenkristallisation. In den meisten Fällen hat sich ein mittlerer Korndurchmesser des kristallisierbaren Glaspulvers zwischen 1-100 µm als günstig erwiesen. Bei zu kleinen Korngrößen neigt das kristallisierbare Glaspulver wegen des großen Oberflächen-/Volumenverhältnisses zu vorzeitiger Oberflächenkristallisation. Eine gute Versinterung wird damit unterbunden. Zu große Korngrößen erschweren die spätere Kristallisation und verschlechtern die mechanische Festigkeit, da beim Versintern viele Mikroporen zurückbleiben. Eine geeignete Methode, die Oberflächenkristallisation des kristallisierbaren Glaspulvers zu vermindern, besteht daher darin, den Feinanteil aus der Korngrößenverteilung des kristallisierbaren Glaspulvers durch geeignete Verfahren, wie z.B. Sedimentation, zu entfernen. Umgekehrt läßt sich die Oberflächenkristallisation gezielt verstärken, indem der Feinanteil erhöht wird.

Wenn die Oberflächenkristallisation ganz besonders verstärkt werden soll, kann es sich als günstig erweisen, einen Teil des kristallisierbaren Glaspulvers bereits in kristallisierter Form zuzugeben oder andere feingemahlene Substanzen zuzugeben, die als Kristallisationskeime wirken.

In der Praxis sind den Änderungen an der Korngrößenverteilung des sinterfähigen Pulvers, dem das kristallisierbare Glaspulver als Hauptbestandteil angehört, Grenzen gesetzt. Diese Grenzen ergeben sich aus der Forderung nach einer hohen Packungsdichte des sinterfähigen Pulvers. Die hohe Packungsdichte führt zu einer hohen Gründichte des Formkörpers. Die Zwickel zwischen größeren Pulverkörnern sind durch kleinere Pulverkörner gut ausgefüllt. Dadurch kommt es zu einer besonders guten Versinterung, da die Fließwege, die das Material beim Sintern zurücklegen muß, minimiert werden. Bei einem vorgegebenen oberen Grenzwert der Korngröße läßt sich die für eine maximale Packungsdichte günstigste Korngrößenverteilung nach der Andreasen-schen Gleichung berechnen.

Da die Porengröße bei dem erfindungsgemäßen Verfahren über die Körnung des anorganischen Salzes gesteuert wird, wird für eine enge Porengrößenverteilung des offenporigen Sinterkörpers meist eine bestimmte Kornfraktion des anorganischen Salzes ausgesiebt. Für bestimmte Anwendungen kann es günstig sein, wenn eine größere Kornfraktion des anorganischen Salzes mit einer kleineren Kornfraktion kombiniert wird, so daß eine Porengrößenverteilung mit 2 Maxima entsteht. Der mittlere Korndurchmesser des anorganischen Salzes liegt, je nach angestrebter Porengröße, meist zwischen 5 µm und wenigen mm.

Die Porengrößenverteilung des offenporigen Sinterkörpers läßt sich weiterhin variieren, indem dem Gemisch aus sinterfähigem Pulver und anorganischem Salz beim Aufbereitungsvorgang ausbrennbare, organische Substanzen zugemischt werden. Durch das Ausbrennen der organischen Substanzen entstehen zusätzliche Hohlräume. Der Sinterprozeß und die späteren Verfahrensschritte müssen so geführt werden, daß die Hohlräume erhalten bleiben. Da die organischen Substanzen im allgemeinen vor Erreichen der Sintertemperatur ausbrennen, besteht insbesonders bei höheren Sintertemperaturen die Gefahr, daß die Hohlräume zu geschlossenen Poren dichtgesintert werden, oder nur durch enge Kanäle miteinander verbunden sind, die den Durchfluß begrenzen.

Infolge der Anwesenheit des Salzes vermeidet das erfindungsgemäße Verfahren diesen Nachteil bekannter Verfahren. Nach dem Auswaschen des Salzes sind die durch das Ausbrennen der organischen Substanzen erzeugten Hohlräume in jedem Fall miteinander verbunden und gehören zur offenen Porosität. Durch Zumischen der ausbrennbaren, organischen Substanzen lassen sich vorzugsweise große Poren erzielen. Zugegebene Schaummittel, wie z.B. SiC, können beim Sintern zu einem zusätzlichen Aufblähen des Sinterkörpers führen.

Es hat sich für die Versinterung als vorteilhaft erwiesen, daß das feingemahlene, kristallisierbare Glaspulver eine kleinere oder gleichgroße Körnung aufweist wie das anorganische Salz. Dies kann durch eine Schutzsiebung erreicht werden, bei der die Korngrößenverteilung nach oben hin begrenzt wird.

Das offene Porenvolumen des porösen Sinterkörpers wird durch das Mengenverhältnis des sinterfähigen Pulvers zu dem des anorganischen Salzes bestimmt, wobei der Gemischanteil des anorganischen Salzes vorzugsweise 20 bis 80 Gew.-% beträgt.

Als weitere Möglichkeit die Kristallisation des kristallisierbaren Glaspulvers zu verstärken, können dem Gemenge beim Erschmelzen des kristallisierbaren Glases Keimbildner zugesetzt werden. Die Keimbildung erfolgt während des Aufheizens und führt zu einer zusätzlichen Volumenkristallisation des kristallisierbaren Glaspulvers.

Zur Erniedrigung der Sintertemperatur kann das sinterfähige Pulver ein feingemahlenes Glaslot enthalten. Die Viskosität des Glaslotes muß beim Aufheizen unter der des kristallisierbaren Glaspulvers liegen. Durch das frühere Erweichen des Glaslotes wird die benötigte Verbindungsfestigkeit bereits bei niedrigeren Temperaturen erreicht. Bei der Zusammensetzung des Glaslotes muß darauf geachtet werden, daß die Materialeigenschaften des offenporigen Sinterkörpers aus Glaskeramik nicht unzulässig verschlechtert werden. Eine Erniedrigung der Sintertemperatur kann auch erreicht werden, indem der Sinterprozeß unter Druck durchgeführt wird.

Für das Versintern kristallisierbarer Glaspulver, die vorzeitige Oberflächenkristallisation zeigen, hat es sich als vorteilhaft erwiesen, daß das sinterfähige Pulver eine Substanz enthält, die die Oberflächenkristallisation verzögert.

Es eignen sich vorzugsweise Glaslote, die wenigstens 5 Gew.-% $B_2O_3$ und/oder $P_2O_5$ enthalten. Beim Sinterprozeß kommt es durch die niedrige Viskosität des Glaslotes während des Aufheizens zu einem Glattfließen des Glaslotes auf den inneren Grenzflächen des Formkörpers. Die Bestandteile des Glaslotes entfalten so ihre Wirkung selektiv auf die Oberflächen der Kristallisierbaren Glaspulver. Das geschilderte Verfahren ist meist günstiger, als wenn man die kristallisationshemmenden Substanzen beim Erschmelzen des kristallisierbaren Glases über das Gemenge einführt. Wegen der selektiven Wirkung auf die Oberflächen sind die erforderlichen Substanzmengen kleiner und, als Folge davon, auch die Auswirkungen auf die Materialeigenschaften der entstehenden Glaskeramik geringer.

Bor und Phosphor können ihre Wirkung auch entfalten, wenn sie als verdampfende oder sich zersetzende Verbindungen dieser Elemente eingeführt werden. Es ist auch möglich, den Sinterprozeß in einem Pulverbett aus den genannten Verbindungen durchzuführen, um so eine bor- oder phosphorhaltige Atmosphäre zu erzeugen.

Die beschriebene Methode zur gezielten Verzögerung der Oberflächenkristallisation beschränkt sich nicht auf bor- und/oder phosphorhaltige Substanzen. Bor und/oder Phosphor sind nur insofern ausgezeichnet, daß sie bei einer besonders großen Anzahl von Gemischen aus sinterfähigem Pulver und anorganischem Salz wirksam sind. Je nach Art des Gemisches können auch andere, die Oberflächenkristallisation verzögernde Substanzen eingesetzt werden. So können z.B. kovalent gebundene Verbindungen, wie AIN, $Si_3N_4$, die Cristobalitbildung in $SiO_2$-reichen Kristallisierenden Gläsern verzögern.

Bei einigen sinterfähigen Pulvern kann es sich als notwendig erweisen, in anderen Atmosphären als in Luft zu sintern. Dies kann z.B. bei den genannten Nitridverbindungen oder bei kristalisierbaren Oxinitridgläsern der Fall sein.

Wenn die Substanzmengen zur Verzögerung der Oberflächenkristallisation und/oder zur Erniedrigung der Sintertemperatur möglichst gering gehalten werden sollen, ist es vorteilhaft, diese Substanzen durch Beschichtung auf das sinterfähige Pulver oder einzelne, darin enthaltene Komponenten, wie insbesonders auf das kristallisierbare Glaspulver, aufzubringen und zu fixieren. Die Beschichtung erfolgt vor dem Mischen mit dem anorganischen Salz. Ein weiterer Vorteil des Beschichtungsverfahrens besteht darin, daß es bei dem Mischen und dem Formgebungsprozeß nicht zu einer Entmischung von sinterfähigem Pulver und den die Oberflächenkristallisation verzögernden Substanzen kommen kann. Als Beschichtungsverfahren für die Pulver eignen sich alle dafür in Frage kommenden Methoden, wie z.B. Sol-Gel-Verfahren, naßchemische Verfahren, Bedampfungsverfahren, sowie thermische Verfahren.

Es ist ein wesentliches Merkmal des erfindungsgemäßen Verfahrens, daß der Ionenaustausch zwischen sinterfähigem Pulver und anorganischem Salz gezielt eingesetzt wird, damit Kristallphasen mit den gewünschten Eigenschaften entstehen. Der Ionenaustausch muß stets berücksichtigt werden, da bei der Sintertemperatur die Diffusionsgeschwindigkeit einiger Ionen, besonders der ein- und zweiwertigen Ionen, für einen Austausch groß genug ist.

Durch die Wahl der Zusammensetzungen von sinterfähigem Pulver und anorganischem Salz kann erreicht werden, daß nur ein geringer Ionenaustausch zwischen ihnen stattfindet. Dies ist z.B. möglich, wenn Kationen geringer Beweglichkeit gewählt werden oder wenn die Kationen des anorganischen Salzes auch Bestandteile der sinterfähigen Pulvers sind. Das anorganische Salz verhält sich dann weitgehend wie ein inerter Füllstoff. Damit das anorganische Salz nach dem Versintern aus dem Sinterkörper herausgelöst werden kann, muß es sich um eine lösliche Substanz handeln.

Unterbleiben auch chemische Reaktionen zwischen dem kristallisierbaren Glaspulver und anderen Komponenten des sinterfähigen Pulvers, so sind die beim Kristallisieren entstehenden Kristallphasen durch die Zusammensetzung des kristallisierbaren Glaspulvers und durch das Kristallisationsprogramm vorgegeben.

Die Zusammensetzungen von sinterfähigem Pulver und anorganischem Salz können so gewählt werden, daß während des Sinterprozesses ein intensiver Ionenaustausch stattfindet. Durch den Ionenaustausch und die stattfindenden chemischen Umbildungen entstehen neue, anorganische Salzverbindungen. Diese liegen dann im Sinterkörper als Gemische verschiedener Salze, teilweise auch als neugebildete Doppelsalze vor. Oft ist mit dem chemischen Umbildungen eine Volumenänderung verbunden. Überraschenderweise wurde in den meisten Fällen gefunden, daß die Funktion des anorganischen Salzes als Platzhalter für die später beim Herauslösen entstehenden Poren trotz der chemischen Umbildungen erhalten bleibt. Wichtig ist, daß nach dem Abkühlen des Sinterkörpers ein lösliches Salz oder Salzgemisch vorliegt.

Durch den gezielten Ionenaustausch zwischen sinterfähigem Pulver und anorganischem Salz können beim Kristallisieren Kristallphasen erzeugt werden, die auf glaskeramischem Wege nicht oder nur mit hohem Aufwand herstellbar sind. So kann z.B. der hochschmelzende Polluzit ($CsAlSi_2O_6$, Schmelzpunkt > 1900°C) über Ionenaustausch bei Temperaturen unter 1200°C hergestellt werden. Kristallphasen, wie z.B. der Leuzit ($KAlSi_2O_6$, Schmelzpunkt ca. 1680°C), die als glasige Pulver nur geringe Kristallisationsneigungen aufweisen, können ebenfalls problemlos hergestellt werden. Dies ist in den Ausführungsbeispielen 2 und 3 beschrieben.

Ausgehend von demselben sinterfähigen Pulver können durch die Zumischung verschiedener anorganischer Salze völlig unterschiedliche Kristallphasen entstehen. Die Materialeigenschaften offenporiger Sinterkörper sind über ihre unterschiedlichen glaskeramischen Gefüge steuerbar.

Neben dem kristallisierbaren Glaspulver als Hauptbestandteil kann das sinterfähige Pulver weitere Komponenten in Teilchen-, Whisker- oder Faserform enthalten. Mit diesen zusätzlichen Komponenten lassen sich neue Gefüge- und Materialeigenschaften erzielen. Dabei ist zwischen zwei Fällen zu unterscheiden.

Wenn sich die zusätzlichen Komponenten inert verhalten, liegt am Ende ein offenporiger Sinterkörper vor, dessen Gefüge einen Verbund aus Glaskeramik und den zusätzlichen Komponenten darstellt. Solche offenporigen Verbundwerkstoffe können sich z.B. durch höhere Festigkeiten oder bessere chemische Beständigkeit auszeichnen.

Im zweiten Fall kommt es durch die zusätzlichen Komponenten während des Sinterprozesses und/oder der Kristallisation des kristallisierbaren Glases zu einem intensiven Ionenaustausch, bzw. zu einer chemischen Umsetzung, wodurch die Kristallisation in andere Bahnen gelenkt wird.

Durch die Anwesenheit der reaktiven Zusatzkomponenten entsteht ein verändertes Gefüge mit neuen Materialeigenschaften. Das Ausführungsbeispiel 10 belegt dies.

Aus Kostengründen ist es vorteilhaft, daß das Gemisch aus sinterfähigem Pulver und anorganischem Salz mit den in der Keramikindustrie gebräuchlichen Formgebungsverfahren, wie z.B. Trockenpressen, Strangpressen, Spritzgießen und Schlickergießen, verarbeitet werden kann. Die Verarbeitung erfolgt unter dem Zusatz marktüblicher, organischer Hilfsstoffe und/oder von Flüssigkeiten. So geht man z.B. beim Strangpressen von einer plastifizierten Masse mit bildsamen Eigenschaften aus. Das Trockenpressen erfolgt durch Zusatz von Preßhilfsmitteln und Aufbereitung zu einem rieselfähigen Preßgranulat. Der Formkörper oder Grünling kann maschinell bearbeitet werden, bevor er dem Sinterprozeß unterzogen wird. Bei Zugabe von Flüssigkeit ist vorher noch ein Trocknungsprozeß erforderlich. Die organischen Hilfsstoffe werden während des Aufheizens durch eine geeignete Führung des Sinterprogramms ausgebrannt.

Für das Herauslösen des löslichen Salzes aus dem Sinterkörper werden aus Kostengründen Wasser oder wässrige Lösungen, sowie Laugen und Säuren bevorzugt.

Aufgrund ihres hohen offenen Porenvolumens lassen sich die Sinterkörper nach dem Versintern oder Kristallisieren mechanisch durch Drehen, Bohren, Fräsen oder Sägen mit Metallwerkzeugen bearbeiten.

Die wesentlichen Vorteile des erfindungsgemäßen Verfahrens zur Herstellung offenporiger Sinterkörper, die ganz oder überwiegend aus Glaskeramik bestehen, liegen in der kostengünstigen Fertigung über keramische Formgebungsverfahren, sowie in der großen Variationsbreite erzielbarer Materialeigenschaften und Eigenschaftskombinationen, die mit anderen Werkstoffen nicht erreichbar sind. Es sind große offene Porenvolumen bei definiert einstellbaren Porendurchmessern herstellbar, wie sie mit keramischen Materialien nicht zu erzielen sind. Das Material liefert offenporige Sinterkörper guter mechanischer Festigkeit mit geringen Durchflußwiderständen. Die mechanischen, thermischen, chemischen und elektrischen Eigenschaften hängen vom Gefüge des glaskeramischen Gerüstmaterials, speziell von der Art der Kristallphasen, ab. So gehen z.B. die thermischen Eigenschaften bezüglich Einsatztemperaturen, Temperaturschockbeständigkeit und Variationsbreite in der thermischen Ausdehnung über die der Gläser hinaus. Auch die chemische Beständigkeit oder die elektrische Isolation erreicht für bestimmte Glaskeramik-Gefüge ausgezeichnete Werte.

Die nach dem erfindungsgemäßen Verfahren hergestellten, porösen Sinterkörper eignen sich besonders gut für Anwendungen bei höheren Temperaturen, wie Flammschutzfilter, Trägermaterial für katalytische Beschichtungen, thermischer Isolator, Dieselrußpartikel-Filter, Heißgas- und Prozeßfiltration, Wärmeaustauscher. Neben dem Einsatz als Trennmedium aufgrund der Filtrationseigenschaften kann auch die Speicherfähigkeit oder die Zerstäuberwirkung ausgenutzt werden. Wegen der hohen Porosität und Temperaturbeständigkeit kann das Material auch als Brennhilfsmittel für Sinterprozesse eingesetzt werden, bei denen hohe Binderanteile ausgebrannt werden.

Die nachfolgenden Beispiele erläutern die Erfindung näher, ohne sie darauf zu beschränken.

Die Ausführungsbeispiele 1-4 betreffen die Methode des gezielten Ionenaustausches zwischen sinterfähigem Pulver und anorganischem Salz. Ausgehend von demselben sinterfähigem Pulver mit der Bezeichnung C-I bilden sich infolge Zumischung verschiedener, anorganischer Salze völlig unterschiedliche Kristallphasen.

In Tabelle 1a und 1b finden sich Angaben zur Herstellung und zu den Materialeigenschaften verschiedener Ausführungsbeispiele.

Das offene Porenvolumen der porösen Sinterkörper wird durch Tränkung unter Vakuum nach DIN 51056 bestimmt. Zur Bestimmung der mittleren Porendurchmesser wird die Vorschrift nach ISO 4793-1980 (E) herangezogen. Mit dieser Methode werden nicht die Hohlräume selbst, sondern die für den Durchfluß entscheidenden Durchgänge zwischen den größeren Hohlräumen bestimmt.

**Beispiel 1 :**

Das sinterfähige Pulver C-I besteht aus 95 Gew.-% eines kristallisierbaren Glaspulvers, das mit folgender Zusammensetzung erschmolzen wurde : 52,5 Gew.-% $SiO_2$, 24,9 Gew.-% $Al_2O_3$, 18,1 Gew.-% MgO, 4,5 Gew.-% $P_2O_5$. Zur Verzögerungder Oberflächenkristallisation enthält das sinterfähige Pulver C-I 5 Gew.-% eines $B_2O_3$-reichen Lotglases der Firma SCHOTT GLASWERKE mit der Typennummer 8462. Beide Gläser wurden getrennt gemahlen und auf eine Körnung < 40 μm abgesiebt. Zur homogenisierung wurden sie dann zusammen auf einen mittleren Korngrößendurchmesser $d_{50}$ = 12 μm weitergemahlen. Das so erhaltene sinterfähige Pulver C-I wurde mit Magnesiumsulfat $MgSO_4$ der Körnung 100-200 μm gemischt. Das $MgSO_4$ hat einen Schmelzpunkt von 1127°C und zersetzt sich an Luft ab etwa 950°C. Es ist in Wasser löslich.

Die Gemischanteile betrugen 40 Gew.-% C-I und 60 Gew.-% $MgSO_4$.

Für die Formgebung mittels Trockenpressen wurden 5 Gew.-% eines Preßwachses als Preßhilfsmittel zugesetzt.

Die Preßkörper wurden bei einer Temperatur von 890°C an Luft 2 Stunden lang gesintert.

Infolge der Zusammensetzung des sinterfähigen Pulvers C-I findet kein oder nur ein geringer Ionenaustausch mit dem porenbildenden Salz $MgSO_4$ statt.

Nach dem Abkühlen wurde das in den Sinterkörpern enthaltene $MgSO_4$ in Wasser herausgelöst. Zur Steigerung der Lösegeschwindigkeit wurden die Sinterkörper im Wasserbad bewegt oder das Wasserbad erwärmt. Anschließend wurden die porösen Sinterkörper nach dem Herauslösen des Salzes durch eine zweite Temperaturbehandlung bei 1200°C und 3 Stunden Dauer in den endgültigen, glaskeramischen Gefügezustand überführt.

Die Dichte der Proben betrug 0,8 g/cm³ und die Biegezugfestigkeit 7,0 N/mm² (siehe Tabelle 1b). Das offene Porenvolumen wurde zu 63 Vol.-% bestimmt, der mittlere Porendurchmesser zu 53 μm. Als Kristallphase des Sintergerüstmaterials wird Cordierit (2 MgO · 2 $Al_2O_3$ · 5 $SiO_2$) festgestellt. Wegen seines hohen Schmelzpunktes und seiner niedrigen thermischen Ausdehnung ist diese Kristallphase besonders für Hochtemperaturanwendungen geeignet, bei denen gute Temperaturschockbeständigkeit gefordert wird. Die thermische Ausdehnung des porösen Sinterkörpers wurde zu $\alpha$ (20°C-300°C) = 2,3 × 10$^{-6}$/K bestimmt.

**Beispiel 2 :**

Das sinterfähige Pulver C-I wurde gemäß Ausführungsbeispiel 1 hergestellt. Als Porenbildner wurde $K_2SO_4$ der Körnung (100-200) μm eingesetzt. Das Mischungsverhältnis betrug 40 Gew.-% C-I / 60 Gew.-% $K_2SO_4$ (siehe Tabelle 1a). Das $K_2SO_4$ hat einen Schmelzpunkt von 1069°C und eine Löslichkeit in Wasser von 10% bei 20°C.

Die Formgebung erfolgte durch Trockenpressen nach Herstellung eines rieselfähigen Preßgranulats. Der Granuliervorgang wurde über Aufbau-Agglomeration nach Zusatz einer wäßrigen Lösung von Polyethylenglycol durchgeführt. Es wurden die Granulatfraktionen von 200-315 μm und 125-200 μm verwendet.

Die Sintertemperatur betrug 890°C und die Sinterzeit 3 Stunden. Während des Sinterprozesses findet ein intensiver Ionenaustausch zwischen sinterfähigem Pulver C-I und dem $K_2SO_4$ statt, wodurch Kalium-Ionen Bestandteil des Sintergerüstes werden. Es liegt ein wasserlösliches Salz, bestehend aus $K_2SO_4$ und/oder $MgSO_4$ bzw. einem Doppelsalz vor.

Nach der Kristallisation liegt Leuzit ($K_2O$ · $Al_2O_3$ · 4 $SiO_2$) als vorherrscnende Kristallphase des Sintergerüstmaterials vor. Infolge der hohen thermischen Ausdehnung des Leuzits und seines hohen Schmelzpunktes sind die offenporigen Sinterkörper gut mit hochtemperaturbeständigen Metallegierungen zu kombinieren. Weitere Angaben zur Herstellung und zu den Eigenschaften finden sich in den Tabellen 1a und 1b.

**Beispiel 3 :**

Das sinterfähige Pulver C-I wurde gemäß den vorstehenden Ausführungsbeispielen hergestellt. Als Porenbildner wurde Caesiumsulfat $Cs_2SO_4$ der Körnung (100-200) μm eingesetzt. Das Mischungsverhältnis betrug 40 Gew.-% C-I / 60 Gew.-% $Cs_2SO_4$. Das $Cs_2SO_4$ hat einen Schmelzpunkt von 1004°C und eine Löslichkeit in Wasser von 64% bei 20°C.

Die Formgebung erfolgte durch Trockenpressen nach Zusatz von 5 Gew.-% Preßwachs.

Während des Sinterprozesses findet ein intensiver Ionenaustausch zwischen dem sinterfähigen Pulver C-I

7

EP 0 308 780 B1

und dem $Cs_2SO_4$ statt, wodurch Caesium-Ionen gegen Magnesium-Ionen ausgetauscht werden und Bestandteil des Sintergerüstmaterials werden.

Nach dem Herauslösen des Salzes in Wasser und dem Kristallisieren liegt Polluzit ($Cs_2O \cdot Al_2O_3 \cdot 4\ SiO_2$) als vorherrschende Kristallphase neben wenig Cordierit vor. Der extrem hohe Schmelzpunkt des Polluzits und seine niedrige thermische Ausdehnung sind besonders für Anwendungen bei hohen Temperaturen interessant. Weitere Angaben zur Herstellung und zu den Eigenschaften finden sich in den Tabellen 1a und 1b.

Beispiel 4 :

Das sinterfähige Pulver C-I wurde gemäß den vorstehenden Ausführungsbeispielen hergestellt. Als Porenbildner wurde Bariumcarbonat $BaCO_3$ der Körnung (100-200) µm eingesetzt. Das Mischungsverhältnis betrug 40 Gew.-% C-I / 60 Gew.-% $BaCO_3$.

Die Formgebung erfolgte Durch Trockenpressen nach Herstellung eines rieselfähigen Preßgranulats, wie in Beispiel 2 beschrieben.

Da das $BaCO_3$ nur sehr wenig im Wasser löslich ist, wird das Salz nach dem Versintern in schwacher Salzsäure herausgelöst. Wegen des Säureangriffs auf das Sintergerüstmaterial sind die Lösezeiten bzw. Probendicken gering zu halten.

Während des Sinterprozesses findet ein intensiver Ionenaustausch zwischen dem sinterfähigen Pulver C-I und dem $BaCO_3$ statt, wodurch Barium-Ionen Bestandteile des Sintergerüstmaterials werden. Nach dem Kristallisieren liegen Cordierit und Celsian als Kristallphasen des Sintergerüstmaterials vor. Weitere Angaben zur Herstellung und zu den Eigenschaften finden sich in den Tabellen 1a und 1b.

Beispiel 5 :

Bei der Herstellung der offenporigen Sinterkörper wurde wie in Beispiel 1 vorgegangen. Im Unterschied zu Beispiel 1 wurde keine zweite Temperaturbehandlung bei höheren Temperaturen durchgeführt. Die Kristallisation wurde bereits im Anschluß an das Sintern vor dem Herauslösen des Salzes durchgeführt und beendet. Als Kristallphase des Sintergerüstmaterials wird wieder Cordierit gefunden.

Infolge des von Beispiel 1 abweichenden Herstellungsverfahrens unterscheiden sich jedoch die glaskeramischen Gefüge und damit auch die Eigenschaften (siehe dazu Tabellen 1a und 1b).

Das Ausführungsbeispiel belegt den großen Spielraum, den das erfindungsgemäße Verfahren bei der Wahl von Sintertemperatur und Sinterzeit, sowie den Kristallisationsbedingungen gewährt.

Beispiel 6 :

Es wurde von einem Gemisch aus sinterfähigem Pulver C-I und Magnesiumsulfat einer Körnung (100-200) µm ausgegangen, wie im Beispiel 1. Die Formgebung wurde, abweichend vom Beispiel 1, durch Strangpressen vorgenommen. Die Herstellung der für das Strangpressen erforderlichen plastifizierten Masse erfolgte durch Zusatz von 25 Gew.-%, bezogen auf das Gemisch, in Wasser/Alkohol (7 Gewichtsteile) gelöster Methylcellulose (3 Gewichtsteile) und intensives Mischen und Kneten. Nach dem Strangpressen wurde der erhaltene Körper getrocknet und anschließend wurde wie im Beispiel 1 weiterverfahren.

Das im Vergleich zu Beispiel 1 andersartige Formgebungsverfahren führt infolge der unterschiedlichen Vorverdichtung der Grünlinge zu unterschiedlicher Porosität. Die stranggepreßten, offenporigen Sinterkörper besitzen gegenüber den trockengepreßten größere Porendurchmesser und vermehrt Mikroporen. Eine solche Porosität ist beim Einsatz als Trägermaterial für die katalytische Beschichtung günstiger. Gefüge und Eigenschaften des Gerüstmaterials werden durch das Formgebungsverfahren nicht beeinflußt. Weitere Angaben zur Herstellung und den Eigenschaften finden sich in den Tabellen 1a und 1b.

Beispiel 7 :

Es wird wie in Beispiel 6 verfahren. Abweichend von Beispiel 6 wird das Magnesiumsulfat $MgSO_4$ mit einer Körnung von (200-315) µm als Porenbildner eingesetzt, um die Einstellbarkeit der Porengröße über die Körnung des anorganischen Salzes zu demonstrieren. Weitere Angaben zur Herstellung und den Eigenschaften finden sich in den Tabellen 1a und 1b.

Beispiel 8 :

Es wird wie in den Beispielen 6 und 7 verfahren. Das Magnesiumsulfat $MgSO_4$ wird mit einer Körnung von

8

(63-100) µm eingesetzt. Der mittlere Porendurchmesser der porösen Sinterkörper ist gegenüber den beiden vorangehenden Beispielen deutlich vermindert. Weitere Angaben zur Herstellung und den Eigenschaften finden sich in den Tabellen 1a und 1b.

Beispiel 9 :

Um einen offenporigen Sinterkörper mit großem, offenen Porenvolumen, geringer Dichte und geringem Durchflußwiderstand herzustellen, wurden dem Gemisch aus sinterfähigem Pulver C-I und anorganischem Salz ausbrennbare, aufgeschäumte Kunstoffkugeln aus Styropor zugemischt. Der mittlere Durchmesser der Styropor(Polystyrol)-Kugeln betrug 1 mm und bestimmt die beim Ausbrennen entstehende Porengröße.

Im einzelnen wurden 300 g des sinterfähigen Pulvers C-I mit 200 g $MgSO_4$ der Körnung (100-160) µm sowie 5g $MnO_2$ und 15g $(NH_4)_2SO_4$ gemischt. In einem zweiten Ansatz wurden 800 ml Styropor-Kugeln mit 50 ml Wasser und 30 ml $H_2O_2$ unter Zusatz eines Plastifizierers gemischt. Als Plastifizierer wurde in diesem Beispiel Glyzerin verwendet. Die beiden Ansätze wurden gemischt und bis zur Homogenisierung geknetet.

Die Zugabe von $H_2O_2$ hat das Ziel, das Ausbrennen des Styropors zu beschleunigen. Das $MnO_2$ wirkt hierbei als Katalysator, um den Sauerstoff des $H_2O_2$ freizusetzen. Durch den Zusatz von $(NH_4)_2SO_4$ und Glyzerin wird die gegenseitige Haftung der anorganischen und organischen Bestandteile verbessert. Die Herstellung einer homogenen, plastischen Masse unter Zusatz von Wasser verhindert, daß es zu einer Entmischung der leichteren organischen Styroporkugeln kommt.

Die homogene, plastische Masse wurde in eine Form eingebracht und getrocknet. Nach dem Trocknen wurde der Grünling der Form entnommen und versintert. Die Sintertemperatur betrug 880°C, die Sinterzeit 4 Stunden. Zum Ausbrennen des Styropors wurde eine zusätzliche Haltezeit beiniedrigeren Temperaturen eingeführt. Nach dem Herauslösen des Salzes wurde der Sinterkörper einer zweiten Temperaturbehandlung bei 1200°C und 3 Stunden Dauer unterworfen. Als Kristallphase des Sintergerüstmaterials liegt Cordierit vor.

Die Porosität des Sinterkörpers ist gekennzeichnet durch große Poren, die durch die ausgebrannten Styroporkugeln erzeugt werden und kleinere Poren, die nach dem Herauslösen des Salzes entstehen.

Das offene Porenvolumen wurde zu 80 Vol.-% bestimmt, die Dichte betrug 0,4 g/cm³.

Beispiel 10 :

In diesem Beispiel wurden weitere keramische Zusatzkomponenten in das sinterfähige Pulver C-I eingeführt. Insgesamt wurden 8 verschiedene Zusatzkomponenten untersucht. Die sinterfähigen Pulver Z-I bis Z-VIII mit ihren verschiedenen Zusatzkomponenten sind in Tabelle 2 aufgeführt. Es wurden jeweils 90 Gew.-% des sinterfähigen Pulvers C-I mit 10 Gew.-% eines Keramik- oder Glaspulvers mit körnungen < 40 µm versetzt. Anschließend wurden jeweils 45 Gew.-% der so erhaltenen sinterfähigen Pulver Z-I bis Z-VIII mit 55 Gew.-% $MgSO_4$ der Körnung (100-200) µm gemischt.

Für die Formgebung durch Trockenpressen wurden 5 Gew.-% Preßwachs zugesetzt.

Das Sintern wurde einheitlich bei 890°C, 2 Stunden Dauer, durchgeführt. Die Kristallphasen wurden nach dem Herauslösen des Salzes durch Röntgenbeugungsanalyse bestimmt. Je nach Art der Zusatzkomponente reagiert diese Zusatzkomponente mehr oder minder stark. So verhält sich z.B. das Yttrium-stabilisierte $ZrO_2$ (sinterfähiges Pulver Z-IV) inert, während sich Kaolin (Z-VIII) vollständig auflöst. MgO (Z-III) und Eukryptit (Z-V und Z-VI) setzen sich vollständig zu anderen Kristallphasen um.

Nach dem Herauslösen des Salzes wurde eine zweite Temperaturbehandlung bei 1200°C, 3 Stunden Dauer, durchgeführt. Durch die höhere Temperatur werden die chemischen Umsetzungen intensiviert. So wird z.B. auch das $ZrO_2$ (Z-IV) mit Silicium aus dem kristallisierbaren Glaspulver C-I zu Zirkon ($ZrSiO_4$) umgesetzt. Die Stärke der Umwandlung ist damit abhängig von der Art der Zusatzkomponente und dem Temperaturprogramm. Dies gilt sowohl für Umwandlungen der Zusatzkomponenten in sich als auch für Umsetzungen der Zusatzkomponenten mit dem kristallisierbaren Glaspulver oder dem anorganischen Salz.

Durch Variation der Zusatzkomponenten und des Temperaturprogramms beim Sintern und Kristallisieren lassen sich die Gefüge- und Materialeigenschaften der offenporigen Sinterkörper damit in weiten Grenzen verändern.

Beispiel 11 :

In diesem Ausführungsbeispiel bestand das sinterfähige Pulver aus einem kristallisierbaren Glas, das mit folgender Zusammensetzung erschmolzen wurde : 57,0 Gew.-% $SiO_2$, 17,9 Gew.-% $Al_2O_3$, 24,8 Gew.-% MgO, 0,3 Gew.-% $Na_2O$. Das sinterfähige Pulver hat die Bezeichnung E-I. Das Glas wurde auf einen mittleren Korndurchmesser $d_{50}$ = 15 µm aufgemahlen und mit Magnesiumsulfat der Körnung (100-160) µm gemischt. Die Gemischanteile betrugen 60 Gew.-% E-I und 40 Gew.-% $MgSO_4$.

Die Formgebung erfolgte durch Trockenpressen nach Zusatz von 5 Gew.-% Preßwachs.

Die Sintertemperatur betrug 860°C und die Sinterzeit 2 Stunden. Nach dem Abkühlen wurde das porenbildende Salz $MgSO_4$ herausgelöst. Das Salz verhält sich beim Sintern inert. Die zweite Temperaturbehandlung wurde bei 1150°C und 2 Stunden Dauer durchgeführt.

Als Kristallphase des Sintergerüstmaterials wurden Enstatit und Cordierit nachgewiesen. Enstatit besitzt gegenüber dem Cordierit eine deutlich höhere thermische Ausdehnung.

Beispiel 12 :

Das sinterfähige Pulver N-I besteht aus 95 Gew.-% eines kristallisierbaren Glaspulvers, das mit folgender Zusammensetzung erschmolzen wurde : 43,2 Gew.-% $SiO_2$, 15,3 Gew.-% $Na_2O$, 4,1 Gew.-% $K_2O$, 30,8 Gew.-% $Al_2O_3$, 6,0 Gew.-% $TiO_2$, 0,6 Gew.-% $As_2O_3$. Zur Verzögerung der Oberflächenkristallisation enthält das sinterfähige Pulver N-I 5 Gew.-% eines $B_2O_3$-reichen Lotglases der Firma Schott Glaswerke mit der Typennummer 8462. Beide Gläser wurden getrennt gemahlen und auf eine Körnung < 40 µm abgesiebt. Zur Homogenisierung wurden sie dann zusammen auf einen mittleren Korndurchmesser $d_{50}$ = 20 µm weitergemahlen. Das so erhaltene, sinterfähige Pulver N-I wurde mit $NaSO_4$ der Körnung (100-200) µm gemischt. Die Gemischanteile betrugen 40 Gew.-% N-I und 60 Gew.-% $NaSO_4$. Das wasserlösliche $NaSO_4$ schmilzt bei 880°C.

Für die Formgebung mittels Trockenpressen wurden 5 Gew.-% eines Preßwachses als Preßhilfsmittel zugesetzt. Die Preßkörper wurden bei einer Temperatur von 840°C an Luft 2 Stunden lang gesintert. Infolge der Zusammensetzung des sinterfähigen Pulvers N-I findet kein oder nur ein geringer Ionenaustausch mit dem porenbildenden Salz $NaSO_4$ statt.

Das im kristallisierbaren Glas enthaltene $TiO_2$ wirkt als Keimbildner und führt zu einer zusätzlichen Volumenkristallisation des kristallisierbaren Glaspulvers.

Nach dem Herauslösen des Salzes wurde eine zweite Temperaturbehandlung bei 1100°C und 2 Stunden Dauer durchgeführt. Die vorherrschende Kristallphase des Sintergerüstmaterials ist Nephelin.

## Tabelle 1a

Herstellung von offenporigen Sinterkörpern aus Glaskeramik

| Lfd. Nr. d. Ausführungs- beispiel | Gemisch-Zusammensetzung sinterfähiges Pulver/ anorganisches Salz *) | Mittlerer Korndurch- messer des sinter- fähigen Pulvers C-I $d_{50}$ (µm) | Korngröße des anorganischen Salzes (µm) | Sinterbedingungen Temperatur, Zeit | Zweite Temperaturbehandlung Temperatur, Zeit |
|---|---|---|---|---|---|
| 1 | 40 Gew.-% C-I / 60 Gew.-% $MgSO_4$ | 12 | 100 - 200 | 890°C, 2 h | 1200°C, 3 h |
| 2 | 40 Gew.-% C-I / 60 Gew.-% $K_2SO_4$ | 12 | 100 - 200 | 890°C, 3 h | 1220°C, 3 h |
| 3 | 40 Gew.-% C-I / 60 Gew.-% $CaSO_4$ | 12 | 100 - 200 | 895°C, 3h | 1200°C, 3 h |
| 4 | 40 Gew.-% C-I / 60 Gew.-% $BaCO_3$ | 12 | 100 - 200 | 920°C, 4 h | 1170°C, 6 h |
| 5 | 40 Gew.-% C-I / 60 Gew.-% $MgSO_4$ | 12 | 100 - 200 | 900°C, 4 h | entfällt |
| 6 | 40 Gew.-% C-I / 60 Gew.-% $MgSO_4$ | 12 | 100 - 200 | 890°C, 2 h | 1200°C, 3 h |
| 7 | 40 Gew.-% C-I / 60 Gew.-% $MgSO_4$ | 12 | 200 - 315 | 890°C, 2 h | 1200°C, 3 h |
| 8 | 40 Gew.-% C-I / 60 Gew.-% $MgSO_4$ | 12 | 63 - 100 | 890°C, 2 h | 1200°C, 3 h |

*) Zusammensetzung von C-I ergibt sich aus Text des Beispiels 1

EP 0 308 780 B1

## Tabelle 1b

Materialeigenschaften offenporiger Sinterkörper aus Glaskeramik

| Lfd. Nr. des Ausführungs- | Offenes Porenvolumen (Vol-%) | Mittlerer Porendurchmesser (µm) | Dichte (g/cm$^3$) | Biegezugfestigkeit (N/mm$^2$) | Thermisches Ausdehnung $\alpha$(20/300)°C (10$^{-6}$ /K) | Kristallphasen |
|---|---|---|---|---|---|---|
| 1 | 63 | 53 | 0.8 | 7.0 | 2.3 | Cordierit |
| 2 | 55 | 35 | 0.8 | 5.2 | 15.4 | Leuzit |
| 3 | 53 | 32 | 1.1 | 3.5 | n.b.* | Polluzit, wenig Cordierit |
| 4 | n.b.* | n.b.* | n.b.* | n.b.* | n.b.* | Cordierit, Celsian |
| 5 | 60 | 48 | 0.8 | 4.2 | 1.6 | Cordierit |
| 6 | 67 | 63 | 0.7 | 5.2 | 2.3 | Cordierit |
| 7 | 65 | 98 | 0.7 | 5.4 | 2.4 | Cordierit |
| 8 | 64 | 48 | 0.7 | 5.0 | 2.3 | Cordierit |

* n.b. = nicht bestimmt

EP 0 308 780 B1

EP 0 308 780 B1

## Tabelle 2

Kristallphasen in offenporigen Sinterkörpern, die aus sinterfähigem Pulver mit verschiedenen Komponenten hergestellt wurden

| Bezeichnung des sinterfähigen Pulvers | Zusammensetzung des sinterfähigen Pulvers | Kristallphasen in den offenporigen Sinterkörpern | | | |
|---|---|---|---|---|---|
| | | Temperaturprogramm: 890°C, 2 h | | Temperaturprogramm: 890°C, 2h + 1200°C, ½h | |
| | | Hauptphasen | Nebenphasen | Hauptphasen | Nebenphasen |
| Z-I | 90 Gew.-% C-1 + 10 Gew.-% Mullit | Cordierit | Mullit | Cordierit | wenig Mullit, nicht ident. Phase |
| Z-II | 90 Gew.-% C-1 + 10 Gew.-% $Al_2O_3$ | Cordierit | Korund ($Al_2O_3$), Mullit, nicht ident. Phase | Cordierit | nicht identifizierte Phase |
| Z-III | 90 Gew.-% C-1 + 10 Gew.-% MgO | µ-Cordierit und/oder Mg-Al-Silikat | Forsterit | Cordierit | Forsterit, nicht ident. Phase |
| Z-IV | 90 Gew.-% C-1 + 10 Gew.-% $ZrO_2$ (Yttrium stabilisiert) | Cordierit | $ZrO_2$, µ-Cordierit | Cordierit | Zirkon ($ZrSiO_4$), nicht ident. Phase |
| Z-V | 90 Gew.-% C-1 + 10 Gew.-% Eukryptit, glasig | Cordierit | Spodumen, nicht ident. Phasen | Cordierit | Spodumen, nicht ident. Phasen |
| Z-VI | 90 Gew.-% C-1 + 10 Gew.-% Eukryptit, kristallin | Cordierit | Spodumen, nicht ident. Phasen | Cordierit | Spodumen, nicht ident. Phasen |
| Z-VII | 90 Gew.-% C-1 + 10 Gew.-% ROBAX*-Glas | Cordierit | Spodumen, nicht ident. Phase | Cordierit | Spodumen, nicht ident. Phase |
| Z-VIII | 94 Gew.-% C-1 + 6 Gew.-% Kaolin | Cordierit | nicht identifizierte Phase | Cordierit | nicht identifizierte Phase |

* Handelsname ROBAX® der Firma SCHOTT GLASWERKE, betrifft ein kristallisierbares Glas auf Li-Al-Silikat-Basis.

**Ansprüche**

1. Verfahren zur Herstellung von zumindest überwiegend aus Glaskeramik bestehenden, offenporigen Sinterkörpern mit großem offenen Porenvolumen und definierten Porendurchmessern, erhältlich durch Sintern eines Gemisches aus sinterfähigem Pulver und anorganischem löslichem Salz definierter Körnung, dessen Schmelzpunkt über der Sintertemperatur des sinterfähigen Pulvers liegt, wobei das Gemisch aus sinterfähigem Pulver und anorganischem Salz zur Bildung eines Formkörpers einem Formgebungsprozeß unterworfen wird und der Formkörper in einem Sinterprozeß versintert wird und das im Sinterkörper enthaltene lösliche Salz nach dessen Abkühlen herausgelöst wird, dadurch gekennzeichnet, daß das sinterfähige Pulver als Hauptbestandteil ein feingemahlenes, kristallisierbares Glaspulver enthält, daß der Sinterprozeß so durchgeführt wird, daß die beim Kristallisieren des kristallisierbaren Glaspulvers entstehenden Kristallphasen und somit die Materialeigenschaften durch die Führung des Sinterprozesses sowie durch zwischen dem sinterfähigen Pulver und dem anorganischen, löslichen Salz stattfindenden Ionenaustausch über deren Zusammensetzungen gesteuert werden und daß der Sinterkörper in den endgültigen glaskeramischen Gefügezustand überführt wird.

2. Verfahren nach Anspruch 1, dadurch gekennzeichnet, daß der poröse Sinterkörper nach dem Herauslösen des Salzes durch eine zweite Temperaturbehandlung in den endgültigen glaskeramischen Gefügezustand überführt wird.

3. Verfahren nach Anspruch 1, dadurch gekennzeichnet, daß die Überführung des kristallisierbaren Glaspulvers in den endgültigen glaskeramischen Gefügezustand vor dem Herauslösen des Salzes im Anschluß an den Sinterprozeß ohne zweite Temperaturbehandlung durchgeführt wird.

4. Verfahren nach einem der Ansprüche 1 bis 3, dadurch gekennzeichnet, daß das sinterfähige Pulver neben dem kristallisierbaren Glaspulver als weitere Komponenten gemahlenes Glas, gemahlene keramisierte Glaskeramik, kristalline Produkte in Teilchen-, Whisker- oder Faserform, oder Mischungen dieser Substanzen enthält.

5. Verfahren nach einem der Ansprüche 1 bis 4, dadurch gekennzeichnet, daß das sinterfähige Pulver zur Erniedrigung der Sintertemperatur ein feingemahlenes Glaslot enthält, dessen Viskosität beim Aufheizen unter der des kristallisierbaren Glaspulvers liegt.

6. Verfahren nach einem der Ansprüche 1 bis 4, dadurch gekennzeichnet, daß das sinterfähige Pulver eine die Oberflächenkristallisation des kristallisierbaren Pulvers verzögernde Substanz enthält, wobei die Substanz vorzugsweise ein Glaslot mit wenigstens 5 Gew.-% $B_2O_3$ und/oder $P_2O_5$ ist.

7. Verfahren nach einem der Ansprüche 1 bis 5, dadurch gekennzeichnet, daß der Formkörper in einer borhaltigen Atmosphäre gesintert wird.

8. Verfahren nach einem der Ansprüche 1 bis 5, dadurch gekennzeichnet, daß der Formkörper in einer phosphorhaltigen Atmosphäre gesintert wird.

9. Verfahren nach einem der Ansprüche 1 bis 5, dadurch gekennzeichnet, daß der Formkörper in einer bor- und phosphorhaltigen Atmosphäre gesintert wird.

10. Verfahren nach einem der Ansprüche 7 bis 9, dadurch gekennzeichnet, daß die bor- und/oder phosphorhaltige Atmosphäre durch verdampfende oder sich zersetzende Verbindungen dieser Elemente erzeugt wird und daß die Verbindungen im sinterfähigen Pulver enthalten sind.

11. Verfahren nach einem der Ansprüche 1 bis 6, dadurch gekennzeichnet, daß das sinterfähige Pulver oder einzelne, darin enthaltene Komponenten vor dem Mischen mit dem anorganischen Salz durch geeignete Verfahren mit einem Glas oder anderen Material zur Erniedrigung der Sintertemperatur und/oder Verzögerung der Oberflächenkristallisation des sinterfähigen Pulvers beschichtet werden.

12. Verfahren nach einem der Ansprüche 1 bis 11, dadurch gekennzeichnet, daß die Zusammensetzungen des sinterfähigen Pulvers und des anorganischen Salzes so gewählt werden, daß während des Sinterprozesses und/oder der Kristallisation des kristallisierbaren Glases bestenfalls nur ein geringer Ionenaustausch zwischen dem sinterfähigen Pulver und dem anorganischen Salz stattfindet, wobei es sich bei dem anorganischen Salz um eine von Beginn an lösliche Substanz handelt.

13. Verfahren nach einem der Ansprüche 1 bis 11, dadurch gekennzeichnet, daß die Zusammensetzungen des sinterfähigen Pulvers und des anorganischen Salzes so gewählt werden, daß während des Sinterprozesses und/oder der Kristallisation des kristallisierbaren Glases ein intensiver Ionenaustausch bzw. eine chemische Umsetzung stattfindet, die die gewünschte Kristallphase entstehen läßt, wobei nach dem Abkühlen des Sinterkörpers ein lösliches Salz oder Salzgemisch vorliegt.

14. Verfahren nach einem der Ansprüche 1 bis 13, dadurch gekennzeichnet, daß als anorganisches Salz vorzugsweise Alkali- oder Erdalkalihalogenide, -sulfate, -karbonate, -nitrate, -phosphate und deren Hydrate, deren Doppelsalze und Mischungen verwendet werden.

15. Verfahren nach einem der Ansprüche 1 und 2 sowie 4 bis 14, dadurch gekennzeichnet, daß die zweite Temperaturbehandlung bei einer höheren Temperatur als der Sinterprozeß durchgeführt wird und daß die offenporige Struktur des Sinterkörpers erhalten bleibt.

16. Verfahren nach einem der Ansprüche 1 bis 15, dadurch gekennzeichnet, daß der Sinterkörper durch eine Oberflächenkristallisation in den glaskeramischen Zustand überführt wird.

17. Verfahren nach einem der Ansprüche 1 bis 15, dadurch gekennzeichnet, daß dem kristallisierbaren Glaspulver zur Erzielung einer zusätzlichen Volumenkristallisation ein Keimbildner zugesetzt wird.

18. Verfahren nach einem der Ansprüche 1 bis 17, dadurch gekennzeichnet, daß das Gemisch aus sinterfähigem Pulver und anorganischem Salz unter Zusatz organischer Hilfsstoffe und/oder einer Flüssigkeit aufbereitet wird und anschließend mit einem gebräuchlichen Formgebungsverfahren verarbeitet wird.

19. Verfahren nach Anspruch 18, dadurch gekennzeichnet, daß das Gemisch durch Trockenpressen, Strangpressen, Spritzgießen oder Schlickergießen als Formgebungsverfahren verarbeitet wird.

20. Verfahren nach einem der Ansprüche 1 bis 19, dadurch gekennzeichnet, daß dem Gemisch aus sinterfähigem Pulver und löslichem, anorganischem Salz bei seinem Aufbereitungsvorgang ausbrennbare, organische Substanzen zugemischt werden, die beim Sinterprozeß während des Aufheizens ausgebrannt werden, wobei die entstehenden Hohlräume beim Sintern und späteren Verfahrensschritten erhalten bleiben.

21. Verfahren nach Anspruch 20, dadurch gekennzeichnet, daß das Gemisch aus sinterfähigem Pulver und anorganischem Salz in Form eines Schlickers aufbereitet wird und die ausbrennbare, organische Substanz eine schwammartige Struktur besitzt, die von dem Schlicker infiltriert wird.

22. Verfahren nach einem der Ansprüche 1 bis 21, dadurch gekennzeichnet, daß der Sinterprozeß unter Druckbeaufschlagung durchgeführt wird.

## Claims

1. A method to produce open-porous sintered bodies at least predominantly consisting of glass-ceramic, showing a large pore volume and defined pore diameters, obtainable by sintering a mixture of sinterable powder and an inorganic soluble salt of defined grain size, the melting point thereof surpassing the sintering temperature of the sinterable powder, the mixture of sinterable powder and the inorganic salt being subjected to a shaping process to form a shaped body and the shaped body being sintered in a sintering process and the soluble salt contained in the sintered body being leached after its cooling, characterized in that the sinterable powder comprises a ground crystallizable glass-powder as main constituent and in that the sintering process is performed thus that the crystal phases being formed in the crystallizing process of the crystallizable glass-powder and hence the properties of the material are managed by the guidance of the sintering process as well as by the ion exchange taking place between the sinterable powder and the inorganic soluble salt through the composition thereof and that the sintered body is transformed to the final glass-ceramic structural state.

2. A method according to claim 1, characterized in that the porous sintered body is converted into the final glass-ceramic structural state by means of a second thermal treatment after having leached the salt.

3. A method according to claim 1, characterized in that the conversion of the crystallizable glass-powder into the final glass-ceramic structural state is performed subsequent to the sintering process without a second thermal treatment before the salt has been leached.

4. A method according to one of the claims 1 to 3, characterized in that, apart from the crystallizable glass-powder, the sinterable powder contains as further component ground glass, ground ceramized glass ceramic, crystalline products in the form of particles, whiskers, or fibers, or mixtures of these substances.

5. A method according to one of the claims 1 to 4, characterized in that, in order to lower the sintering temperature, the sinterable powder contains a finely ground solder glass the viscosity of which is below the one of the crystallizable glass-powder when heated up.

6. A method according to one of the claims 1 to 4, characterized in that the sinterable powder contains a substance which delays the surface crystallization of the crystallizable powder, the substance preferably being a solder glass of at least 5 weight-% $B_2O_3$ and/or $P_2O_5$.

7. A method according to one of the claims 1 to 5, characterized in that the mould body is sintered in an atmosphere containing boron.

8. A method according to one of the claims 1 to 5, characterized in that the mould body is sintered in an atmosphere containing phosphorus.

9. A method according to one of the claims 1 to 5, characterized in that the mould body is sintered in an atmosphere containing boron and phosphorus.

10. A method according to one of the claims 7 to 9, characterized in that the atmosphere containing boron and/or phosphorus is formed by vaporable or decomposing compounds of said elements and that the compounds are contained in the sinterable powder.

11. A method according to one of the claims 1 to 6, characterized in that, before mixing with the inorganic salt, the sinterable powder or single components contained therein are coated by suitable procedures with a glass or another material in order to lower the sintering temperature and/or to delay the surface crystallization of the sinterable powder.

12. A method according to one of the claims 1 to 11, characterized in that the compositions of the sinterable powder and the inorganic salt are chosen thus that, in the course of the sintering process and/or the crystallization of the crystallizable glass, only a minor ion exchange between the sinterable powder and the inorganic salt takes place at best, the inorganic salt referring to a substance being soluble from the beginning.

13. A method according to one of the claims 1 to 11, characterized in that the compositions of the sinterable powder and the inorganic salt are chosen thus that, in the course of the sintering process and/or the crystallization of the crystallizable glass, an intensive ion exchange or a chemical transformation takes place respectively, which make the desired crystalline phase to arise, a soluble salt or salt mixture being present after cooling down the sintered body.

14. A method according to one of the claims 1 to 13, characterized in that as an inorganic salt alkali or alkaline earth halides, sulfates, carbonates, nitrates, phosphates and the hydrates thereof, the double salts and the mixtures thereof are preferably used.

15. A method according to one of the claims 1 and 2 as well as 4 to 14, characterized in that the second thermal treatment is accomplished at a higher temperature than the sintering process and that the open-porous structure of the sintered body is maintained.

16. A method according to one of the claims 1 to 15, characterized in that the sintered body is converted to the glass ceramic state by means of a surface crystallization.

17. A method according to one of the claims 1 to 15, characterized in that, in order to reach an additional volume crystallization, a nucleating agent is added to the crystallizable glass-powder.

18. A method according to one of the claims 1 to 17, characterized in that the mixture of sinterable powder and inorganic salt is processed by adding organic auxiliary substances and/or a liquid and is subsequently worked in a common moulding process.

19. A method according to claim 18, characterized in that, as a moulding process, the mixture is worked by dry pressing, extruding, injection moulding, or slip casting.

20. A method according to one of the claims 1 to 19, characterized in that, during the processing action, organic substances that can be burnt out are admixed to the mixture of sinterable powder and the soluble inorganic salt and which are burnt out in the sintering process while being heated up, the arising cavities being kept at the sintering process and in later procedural steps.

21. A process according to claim 20, characterized in that the mixture of sinterable powder and the inorganic salt is processed in the form of a slip and that the organic substance that can be burnt out has a sponge-like structure which is infiltrated by the slip.

22. A method according to one of the claims 1 to 21, characterized in that the sintering process is performed under pressure conveyance.

## Revendications

1. Procédé de fabrication de corps frittés à pores ouverts, se composant au moins majoritairement de vitrocéramique, ayant un grand volume de pores ouverts et des diamètres de pores définis, que l'on peut obtenir par frittage d'un mélange de poudre frittable et de sel soluble minéral de granulométrie définie, dont le point de fusion se situe au-dessus de la température de frittage de la poudre frittable, dans lequel on soumet à un processus de façonnage le mélange de poudre frittable et de sel minéral, en vue de la formation d'un corps façonné, et l'on effectue le frittage du corps façonné dans un processus de frittage, et l'on extrait par lixiviation le sel soluble contenu dans le corps fritté après son refroidissement, caractérisé par le fait que la poudre frittable contient, comme constituant principal, un verre pulvérisé, cristallisable, finement broyé, que le procédé de frittage est conduit de sorte que les phases cristallines se formant lors de la cristallisation du verre pulvérisé cristallisable et, par conséquent, les propriétés du matériau sont gouvernées par la conduite du processus de frittage de même que par un échange d'ions ayant lieu entre la poudre frittable et le sel soluble, minéral, par l'intermédiaire de leurs compositions, et que le corps fritté est amené dans l'état structural vitrocéramique définitif.

2. Procédé selon la revendication 1, caractérisé par le fait que le corps fritté poreux est amené dans l'état structural vitrocéramique définitif après l'extraction du sel par lixiviation, par un deuxième traitement thermique.

3. Procédé selon la revendication 1, caractérisé par le fait que le passage du verre pulvérisé cristallisable dans l'état structural vitrocéramique définitif est effectué avant l'extraction du sel par lixiviation, à la suite du processus de frittage, sans un deuxième traitement thermique.

4. Procédé selon l'une des revendications 1 à 3, caractérisé par le fait que la poudre frittable contient, outre le verre pulvérisé cristallisable, comme autres composants, du verre broyé, de la vitrocéramique céramisée broyée, des produits cristallins sous forme de particules, barbes ou fibres, ou des mélanges de ces substances.

5. Procédé selon l'une des revendications 1 à 4, caractérisé par le fait que la poudre frittable contient, en vue d'une diminution de la température de frittage, un verre d'apport finement broyé, dont la viscosité lors de la refusion se situe au-dessous de celle du verre pulvérisé cristallisable.

6. Procédé selon l'une des revendications 1 à 4, caractérisé par le fait que la poudre frittable renferme une substance retardant la cristallisation superficielle de la poudre cristallisable, la substance étant, de préférence, un verre d'apport présentant au moins 5% en poids de $B_2O_3$ et/ou $P_2O_5$.

7. Procédé selon l'une des revendications 1 à 5, caractérisé par le fait qu'on conduit le frittage du corps façonné dans une atmosphère à teneur en bore.

8. Procédé selon l'une des revendications 1 à 5, caractérisé par le fait qu'on conduit le frittage du corps façonné dans une atmosphère à teneur en phosphore.

9. Procédé selon l'une des revendications 1 à 5, caractérisé par le fait qu'on conduit le frittage du corps façonné dans une atmosphère à teneur en bore et en phosphore.

10. Procédé selon l'une des revendications 7 à 9, caractérisé par le fait que l'atmosphère à teneur en bore et/ou en phosphore est obtenue par des composés de ces éléments, qui s'évaporent ou se décomposent, et que les composés sont contenus dans la poudre frittable.

11. Procédé selon l'une des revendications 1 à 6, caractérisé par le fait que la poudre frittable ou des composants individuels contenus dans celle-ci, sont enrobés avant le mélange avec le sel minéral, par des procédés appropriés, d'un verre ou d'une autre matière pour diminuer la température de frittage et/ou retarder la cristallisation de surface de la poudre frittable.

12. Procédé selon l'une des revendications 1 à 11, caractérisé par le fait que les compositions de la poudre frittable et du sel minéral sont choisies de telle sorte que, pendant le processus de frittage et/ou la cristallisation du verre cristallisable, n'a lieu dans le meilleur des cas qu'un faible échange d'ions entre la poudre frittable et le sel minéral, où il s'agit, dans le cas du sel minéral, d'une substance soluble depuis le début.

13. Procédé selon l'une des revendications 1 à 11, caractérisé par le fait que les compositions de la poudre frittable et du sel minéral sont choisies de telle sorte que, pendant le processus de frittage et/ou la cristallisation du verre cristallisable, a lieu un échange d'ions intensif ou une réaction chimique, qui permet de former la phase cristalline souhaitée, où, après le refroidissement du corps fritté, il se présente un sel soluble ou un mélange de sels solubles.

14. Procédé selon l'une des revendications 1 à 13, caractérisé par le fait que, comme sel minéral, on utilise, de préférence, des halogénures, sulfates, carbonates, nitrates, phosphates alcalins ou alcalino-terreux et leurs hydrates, leurs sels doubles et mélanges.

15. Procédé selon l'une des revendications 1 et 2 ainsi que 4 à 14, caractérisé par le fait qu'on conduit le deuxième traitement thermique à une température supérieure à celle du processus de frittage et que la structure à pores ouverts du corps fritté reste maintenue.

16. Procédé selon l'une des revendications 1 à 15, caractérisé par le fait que le corps fritté est amené, par une cristallisation superficielle, dans l'état vitrocéramique.

17. Procédé selon l'une des revendications 1 à 15, caractérisé par le fait que l'on ajoute un agent de formation de germes au verre pulvérisé cristallisable, en vue de l'obtention d'une cristallisation volumique additionnelle.

18. Procédé selon l'une des revendications 1 à 17, caractérisé par le fait qu'on prépare le mélange de poudre frittable et de sel minéral, avec addition d'adjuvants organiques et/ou d'un liquide, puis qu'on le transforme par un procédé de façonnage usuel.

19. Procédé selon la revendication 18, caractérisé par le fait qu'on transforme le mélange par pressage à sec, boudinage, moulage par injection ou coulée en barbotine en tant que procédé de façonnage.

20. Procédé selon l'une des revendications 1 à 19, caractérisé par le fait qu'on incorpore au mélange de poudre frittable et de sel minéral, soluble, lors de son processus de préparation, des substances organiques, autopyrogénables, qui sont autopyrogénées lors du processus de frittage pendant la refusion, les cavités qui se forment restant maintenues lors du frittage et des étapes de procédé ultérieures.

21. Procédé selon la revendication 20, caractérisé par le fait qu'on prépare le mélange de poudre frittable et de sel minéral sous la forme d'une barbotine, et que la substance organique, autopyrogénable, possède une structure spongieuse, qui est infiltrée par la barbotine.

22. Procédé selon l'une des revendications 1 à 21, caractérisé par le fait qu'on conduit le processus de

frittage sous pression.